# EUROPEAN PATENT APPLICATION

(11) **EP 2 677 727 A1**
(43) Date of publication of application: **25.12.2013**
(21) Application number: 12305694.7
(22) Date of filing: 18.06.2012
(51) Int. Cl.: H04M 1/725

(54) **Peripheral device for converting and transmitting digital data via an audio connector**

(71) Applicant: Gemalto SA, 92190 Meudon (FR)
(72) Inventor: Aussel, Jean-Daniel, 92190 Meudon (FR); Gullberg, Peter, 92190 Meudon (FR); Sadagopan, Sridharan, 92190 Meudon (FR); Mochtar, Morenvino, 92190 Meudon (FR); Leroy, Pascal, 92190 Meudon (FR); Marseille, François-Xavier, 92190 Meudon (FR)
(74) Representative: Cour, Pierre

(57) **Abstract**

The A peripheral device (PD) for converting and transmitting digital data via an audio connector (J) is intended to be connected with a host device (DE2). The peripheral device (PD) comprises at least one calculator (CPU) for performing a communication between the peripheral device and a host device. The peripheral device comprises:
• a digital modulator allowing modulating digital data by encoding or/and decoding digital data frames ;
• an audio converter (ADC, DAC) for converting an audio signal into a digital signal and vice versa ;
• one output audio interface (S) and one input audio interface (M) being compatible with an audio jack connector (J) and with the audio converter (ADC, DAC) ;
• an audio jack connector (J) for connecting the peripheral device into the host device.
• an audio jack connector (J) for connecting the peripheral device into the host device.

## Description

### Technical field

This invention involves the electronic communication field, especially the audio peripheral connector allowing data transmission.

The field of the invention also involves the addition of data connectivity for every equipment comprising an audio interface as a jack connector.

### Background technology

Currently, many mobile devices are growing significant market such as smartphones, tablets, etc. But these devices do not have means to benefit from strong security using an interoperable external peripheral. This secure peripheral cannot be plugged into the mobile devices because they are lacking proper connectivity or locked proprietary operating system that are not widely available across wide range of devices.

For example, Blackberry has an USB connector, while iPhone has a 30-pin connector. On inconvenience, is that a peripheral using the 30-pin connector will not be able to address Android phone which doesn't have the 30-pin connector. This complicates the design, inventory, and bill of material.

A problem with such solutions is that there is no convergence between constructors on one standard and interoperable connector, the connector allowing data transmission whatever the mobile device used.

Unfortunately, all mobile devices, as iPhone, Android based phones, Blackberry, have evolved without much convergence. Unlike computer that has industry-standardized USB connection, until today there is no universal connector that can connect to a wide array of these devices with a peripheral, for instance a smart card reader. Even when this solution exists, it only has limited the interoperability of data transfers between different models of different mobile devices.

One alternative is to use contactless communication instead of hardwired connector. One such possibility is using the Bluetooth technology which present virtually on all tablet and smartphone. However, one drawback of this solution is that all devices doesn't support same range of profile. For instance, Android platform supports Bluetooth Serial Port Profile, but iPhone does not.

### Summary

One object of the invention is to overcome at least some of the inconveniences of the state of the art.

The invention involves a peripheral device for converting and transmitting digital data via an audio connector. The peripheral device is intended to be connected with an host device. Advantageously, the peripheral device comprises at least one calculator for performing a communication between the peripheral device and a host device.

The peripheral device comprises:
- a digital modulator allowing modulating digital data by encoding or/and decoding digital data frames ;
- an audio converter (ADC, DAC) for converting an audio signal into a digital signal and vice versa ;
- one output audio interface (S) and one input audio interface (M) being compatible with an audio jack connector (J) and with the audio converter (ADC, DAC) ;
- an audio jack connector (J) for connecting the peripheral device into the host device.

Advantageously, the calculator acts as a controller managing a bus controller or serial port connections and accessing data from a memory.

Advantageously, the calculator performs digital modulator functions. Advantageously, the calculator performs audio converter functions.

Advantageously, the converter comprises an ADC converter and a DAC converter in one embodiment and a GPIO in another embodiment.

Advantageously, the digital data frames comprises a preamble field enabling synchronisation function, a header field identifying the type of frame, a length field indicating the size of the data. Furthermore, the digital data frames comprises a CRC or a checksum field providing error detection and retransmission functions.

Advantageously, a button allows the CPU to generate an OTP via the audio output interface.

Advantageously, a live detection circuit allows activating a standby mode when no audio signal is detected in the audio converter.

Advantageously, the preamble of the frame enables live detection function and a wake-up function.Alternatively using one of the audio channel, either left or right channel for live detection and wake-up function.

Advantageously, the calculator allows at least one of the modulations of the following list: FSK modulation, ASK modulation, PSK modulation or Manchester modulation of digital data flow.

The invention relates to a peripheral device using an audio connector as a jack connector. The invention comprises means for establishing a communication between two devices using audio signal to exchange data. The peripheral device of the invention can be incorporated into many devices, such as smart card reader, hard disk, extended storage, sensors, to exchange data with other mobile devices, called "host device", on conditions it comprises an audio connector.

Thus, the peripheral device of the invention enables wide ranges of services for mobile devices, such as secure e-banking with audio smart card reader, sensing application based on various sensor, etc.

Advantageously, a lot of mobile devices have an audio connector. This audio connector is widely available since it is used for phone call, music, audio, memo taking and voice recognition. The peripheral device of the invention allows using the audio connector, for instance the Jack connector, as an interface for transmitting digital data between two electronic devices, for instance two mobile devices.

### Brief description of the drawings

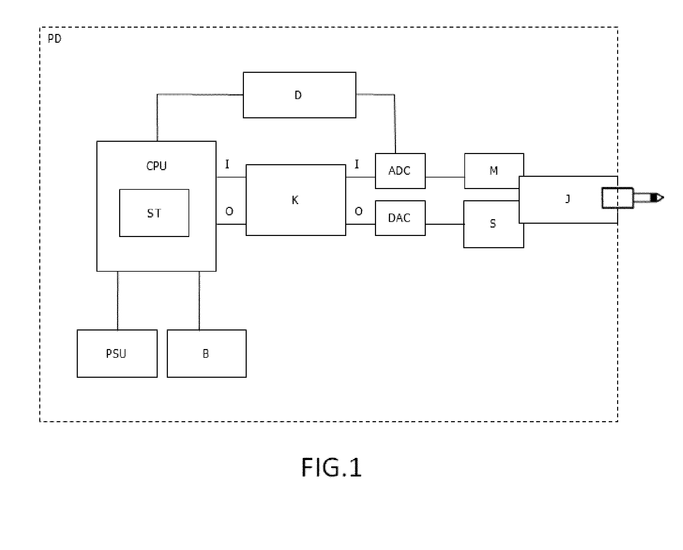

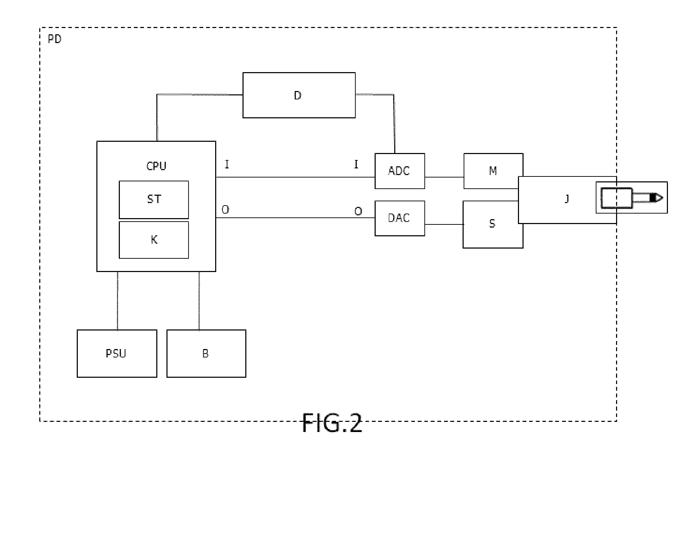

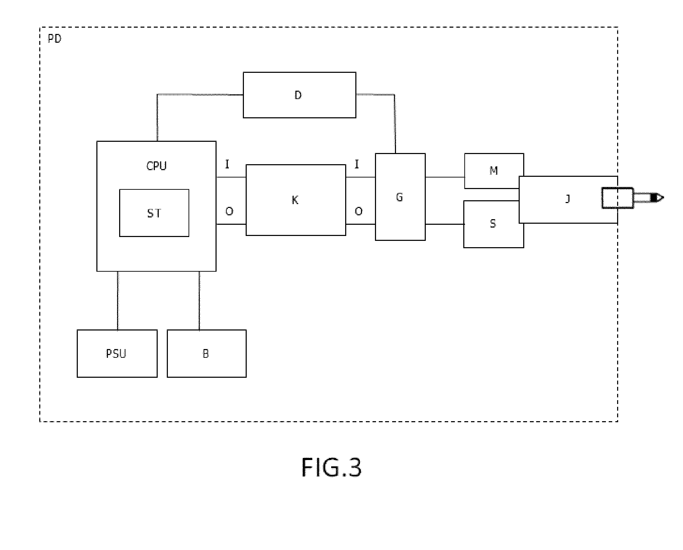

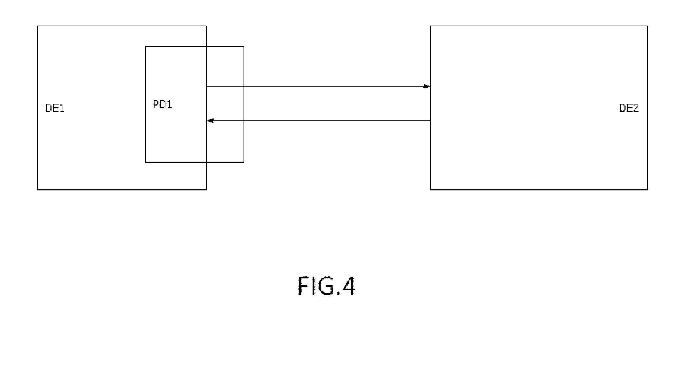

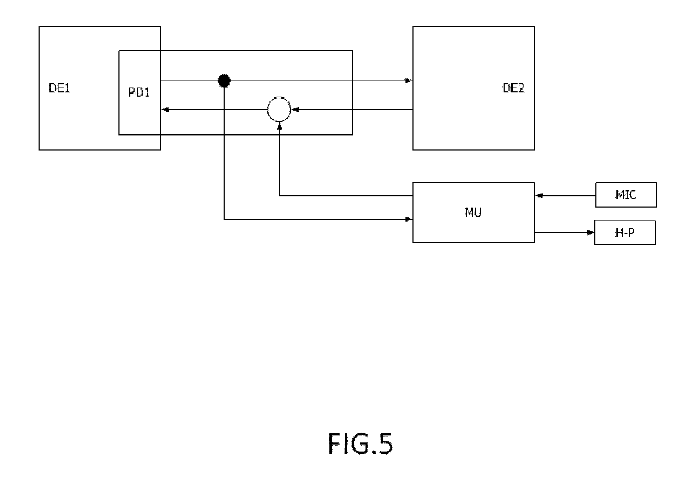

These and other aspects of the invention will be apparent from and elucidated with reference to the embodiments described hereafter with reference being made to the drawings in which:
■ figure 1 : illustrates one embodiment of a peripheral device of the invention comprising an external converter ;
■ figure 2 : illustrates a second embodiment of a peripheral device of the invention comprising an internal converter ;
■ figure 3 : illustrates a second embodiment of a peripheral device of the invention comprising a GPIO chip ;
■ figure 4 : illustrates communication capability of two communication devices having a peripheral device of the invention;
■ figure 5 : illustrates two communication devices having a peripheral device of the invention for dual uses.

### Detailed description

Figures 1, 2 and 3 relate to some embodiments of a peripheral device PH showing different configurations of components or chip that can be used in the invention.

FIG. 1 illustrates a peripheral device PH comprising at least one first central processing unit, noted CPU. This first CPU, when used as controller chip, achieves controller functions of the peripheral. The first CPU allows performing the communication logic between the peripheral device of the invention and a host device.

The first CPU is able of managing a bus controller or serial port connections when it is incorporated, for instance, in a smart card. In particular, the first CPU is able to access a memory, for instance a memory card, via a bus controller or a serial port.

Furthermore, the first CPU is able to define a state machine depending of the environmental conditions of the peripheral device. For instance, in one embodiment of the invention, a button B allows to authorize the establishment of a communication between the peripheral device and a host device. The state of the button ON/OFF can be saved in a memory in order to authorize data transmission or not. The use of a button B permits to secure some critical applications as on line payment applications for instance. These functions can be employed when peripheral device is used in a smart card for allowing transaction authorization by generating, for instance, a login/password authentication when used with an OTP component. OTP designating a "One time password". The button can be also used to ensure the presence of an operator when data transfer is planned.

The peripheral device also comprises a calculator for encoding and decoding digital data. The decoding and encoding functions are noted K on figures 1, 2, 3. In figure 1, these functions are supported by a specific chip, as a second CPU for instance.

In the example of figure 1, the encoding/ decoding chip comprises two inputs and two outputs for transferring encoded and decoded data from the first CPU to an analog/digital converter noted ADC/DAC on figure 1 for Analog-to-digital converter and Digital-to-analog converter.

In another embodiment shown in figure 2, the function of decoding and encoding digital data is supported by the first CPU. The first CPU allows realizing the controller functions and the encoding and decoding functions. In that example, the first CPU manages the encoding and decoding functions. In this embodiment, the input and the output of the CPU are directly connected to the ADC/DAC converter or a GPIO (General Purpose Input/Output) component.

The peripheral device comprises analog / digital converting functions. In one example of the invention the peripheral device comprises an analog / digital component which allows converting a digital data flow into an analog signal and vice versa. When an audio signal is received via the Jack connector J from a mobile device which is connected to the peripheral, the analog/digital device allows converting the analog signal into a digital signal.

In one embodiment the analog/ digital converter comprises an ADC and DAC converters as shown in figure 1. The ADC converter comprises at least one input and one output and the DAC converter comprises at least one input and one output.

In another embodiment the analog / digital converter of the peripheral device comprises a GPIO component as shown in figure 3 as an alternative. The GPIO component is a General Purpose Input/Output component. GPIO allows configuring the input and output levels and the numbers of levels of signals converted by the analog /digital converter.

The peripheral of the invention comprises an audio connector J as for instance a Jack connector comprising a microphone input M and a speaker output S. The Jack connector J is intended to be connected to a host device. The host device can be a mobile device.

The peripheral device of the invention is a peripheral device intended to be connected with a mobile devices with audio capability, such as a smartphone, a mobile phone or a tablet.

In one embodiment this peripheral can be a smart card reader, a hard disk, an extended storage, a sensor or any external peripheral that would like to exchange data with a host device.

For devices with audio capabilities, such as smartphone or tablet, the invention opens these devices to external peripheral which allows a wide range of services, such as secure e-banking with audio smart card reader, sensing application based on various sensor, etc.

In one embodiment of the invention, the peripheral device of the invention comprises a power supply unit PSU as for instance a battery. The battery could be a rechargeable one.

In another embodiment, the audio connector allows a power supply backlink. In that case, the host device is supplying power to the components or the battery of the peripheral device.

In one embodiment of the invention, the peripheral device comprises a live detection circuit D which allows detecting the presence of signal in the converter, especially an input signal from a host device. The live detection circuit is connected between the converter and the first CPU.

The peripheral device of the invention allows ensuring integrity by formatting data to be exchanged into frames.

In one embodiment, a data frame comprises several fields of data. One field relates to a preamble in order to enable synchronization and live detection. The preamble field allows waking up the first CPU. That field allows saving battery. A second field of the frame relates to a header field which identifies the type of frame. Another filed relates to the length of the frame which allows indicating the size of the data contained in the frame. A CRC or a checksum field is used for providing error detection and retransmission. The higher level application information is carried in the data field of the frame.

When cryptography requirements are needed, key materials present in the peripheral device can be used to provide confidentiality and integrity for the data by optionally enciphering and adding message authentication digest.

The frame is then encoded into audio signal based on the selected encoding method.

The figure 4 illustrates a peripheral PD1 which is incorporated in to a device DE1 which allows an audio connection with a host device DE2 as a smartphone for data transmission transfers via the audio connector.

The device DE1 can support a plurality of functions. For instance, when it is used with a smart card reader, the device DE1 allows a connection with a smart card.

The devices are connected using audio connector. The audio output of one device is connected to audio input of another device and vice versa.

Considering the sending device, data are exchanged by encoding the data to be exchanged into audio frequency signal and by sending the encoded audio signal over the audio connection.

Considering the receiving Device, data are exchanged by decoding the audio signal to get back the data

One example one encoding/decoding method can be as follows:
- an encoding chip (or can it can be internal logic built-in to the main chip) to perform the digital encoding/decoding (e.g. FSK, ASK, PSK, Manchester and etc) or ;
- an ADC and DAC converter or it could be a GPIO, to perform audio signal input and output.

The data are formatted into frames as described above.

The figure 5 illustrates a peripheral device of the invention when it is incorporated in a specific device DE1 as a smart card reader for instance.

The peripheral device of the invention is able to communicate with a host device DE2 and with an audio device, noted MU, having is own connexions as a speaker H-P and a microphone MIC.

In this embodiment, the audio link can be either dedicated for data exchange or shared with another audio application, for instance voice and data. A specific connector of the peripheral device allows connecting two mobile devices as for instance a host device DE2 and an audio device. Both the audio channels right and left for parallel encoding the data for x2 data rate are being used.

In this embodiment, the audio link is shared between two host devices. The audio and data signals are interleaved by using the steganography technique for instance. This technique enables simultaneous data and audio communications with a reduced data rate.

The peripheral of the invention can replace data connection, for instance serial port or USB, to certain extent on device, as for example a smartphone, that do not have other data communication channel. In the case of smart reader, it allows wide array of device to perform multi-factor authentication, PKI applications, EMV transaction and various smartcard-aware application.

## Claims

1. A peripheral device (PD) for converting and transmitting digital data via an audio connector (J), the peripheral device (PD) being intended to be connected with an host device (DE2), the peripheral device (PD) comprising at least one calculator (CPU) for performing a communication between the peripheral device and a host device, the peripheral device comprising
• a digital modulator allowing modulating digital data by encoding or/and decoding digital data frames ;
• an audio converter (ADC, DAC) for converting an audio signal into digital data frames and vice versa ;
• one output audio interface (S) and one input audio interface (M) being compatible with an audio connector (J) and with the audio converter (ADC, DAC);
• an audio connector (J) for connecting the peripheral device into the host device and for transmitting the digital data flow into a converted audio signal.

2. A peripheral device according to claim 1, wherein the calculator acts as a controller managing a bus controller or serial port connections and accessing data from a memory.

3. A peripheral device according to any claim from 1 to 2, wherein the calculator performs digital modulator functions.

4. A peripheral device according to any claim from 1 to 3, wherein the calculator performs audio converter functions.

5. A peripheral device according to any claim from 1 to 4, wherein the converter comprises an ADC converter and a DAC converter.

6. A peripheral device according to any claim from 1 to 5, wherein the converter comprises a GPIO chip.

7. A peripheral device according to any claim from 1 to 6, wherein the audio connector is a Jack connector.

8. A peripheral device according to any claim from 1 to 7, wherein the digital data frames comprising a preamble field enabling synchronisation function, a header field identifying the type of frame, a length field indicating the size of the data.

9. A peripheral device according to any claim from 1 to 8, wherein the digital data frames comprising a CRC or a checksum field providing error detection and retransmission functions.

10. A peripheral device according to any claim from 1 to 9, wherein a button (B) allows the CPU to generate an OTP via the audio output interface.

11. A peripheral device according to any claim from 1 to 10, wherein a live detection circuit allows activating a standby mode when no audio signal is detected in the audio converter.

12. A peripheral device according to any claim from 1 to 11, wherein the preamble of the frame enables live detection function and a wake-up function.

13. A peripheral device according to any claim from 1 to 12, wherein the calculator allows at least one of the modulations of the following list: FSK modulation, ASK modulation, PSK modulation or Manchester modulation of digital data flow.
